# EUROPÄISCHE PATENTSCHRIFT

(11) **EP 2 544 034 B1**
(45) Veröffentlichungstag und Bekanntmachung des Hinweises auf die Patenterteilung: **20.09.2017**
(21) Anmeldenummer: 12004895.4
(22) Anmeldetag: 02.07.2012
(51) Int. Cl.: H04B 10/278, G02B 6/28

(54) **Optisches Datenübertragungssystem**
Optical data transfer system
Système optique de transmission de données

(30) Priorität: 06.07.2011 DE 102011106783
(43) Veröffentlichungstag der Anmeldung: 09.01.2013
(73) Patentinhaber: Airbus Defence and Space GmbH, 85521 Ottobrunn (DE)
(72) Erfinder: Plankl, Helmut, 85055 Ingolstadt (DE)

(56) Entgegenhaltungen:
- EP-A2- 0 053 324
- EP-A2- 0 811 860
- EP-A2- 1 253 447
- US-A- 4 053 764

## Beschreibung

### GEBIET DER ERFINDUNG

Die Erfindung betrifft die optische Datenübertragung bzw. das optische Auslesen von Daten einer Vorrichtung. Insbesondere betrifft die Erfindung ein optisches Datenübertragungssystem, ein Flugzeug mit einem optischen Datenübertragungssystem, die Verwendung eines optischen Datenübertragungssystems in einem Flugzeug sowie ein Verfahren zum Auslesen von Daten einer Vorrichtung.

### TECHNOLOGISCHER HINTERGRUND

Komplexe technische Vorrichtungen weisen heutzutage regelmäßig eigene interne Software auf. Dabei können bei der bestimmungsgemäßen Verwendung Daten generiert werden, die für den Benutzer oder für ein Verfahren zur Überprüfung der Vorrichtung von Interesse sind. Solche Daten können dann beispielsweise über optische Anschlüsse ausgelesen und an Diagnosevorrichtungen weitergegeben werden. Gerade im Bereich der Luftfahrttechnik ist das Auslesen und die Überprüfung der Systeme des Luftfahrzeuges durch ein Diagnosemodul am Boden von äußerster Wichtigkeit. Dazu kann beispielsweise ein Diagnosemodul über einen optischen Bus an das Flugzeug angeschlossen werden, um ein Diagnoseverfahren bezüglich der Flugzeugsysteme durchzuführen. Dabei können verschiedene Signale von dem angeschlossenen Diagnosemodul an das Flugzeug und umgekehrt mittels elektromagnetischer Energie übertragen werden.

Dabei kann es jedoch zu Fehlern bei der Auslesung oder bei der Durchführung des Diagnoseverfahrens oder beim Laden von Software kommen. Bisher sieht der Stand der Technik lediglich, einen Anschluss an einem Flugzeug vor, um mit optischer Datenübertragung das Flugzeug einem Diagnoseverfahren zu unterziehen. Dabei ist es nicht möglich, während der Durchführung des Diagnoseverfahrens im scher Datenübertragung das Flugzeug einem Diagnoseverfahren zu unterziehen. Dabei ist es nicht möglich, während der Durchführung des Diagnoseverfahrens im Rahmen einer Wartung die Durchführung zu überprüfen und eventuelle Fehler bei der detektieren und an den Benutzer weiterzugeben.

Im Stand der Technik sind sogenannte 3Y-Lösungen bekannt, bei welchen zwischen einem optischen Anschluss und einer Vorrichtung drei unterschiedliche Y-Koppler eingesetzt werden. Diese sind sowohl von ihrer Dimension her äußert unpraktisch, verlängern den optischen Weg für die Signale, erhöhen signifikant die Dämpfung und verursachen erhebliche Kosten für den Hersteller. Ebenso ergeben sich bei dieser Lösung des Standes der Technik Unzulänglichkeiten bei großen Temperaturunterschieden.

Die Druckschrift EP 0 811 860 A2 betrifft verlustarme, optische Splitter, insbesondere Splitter mit einer Y-Verzweigung, welche durch chemische Gasphasenabscheidung (CVD) hergestellt werden.

Weiter offenbart die Druckschrift EP 0 053 324 A2 ein optisches Verzweigungsglied, dessen Aufbau derart gewählt ist, dass auf einen optischen Koppelkitt verzichtet wird.

Die Druckschrift US 4,053,764 betrifft ein T-Kopplungsstück für Glasfaserleitungen. Druckschrift EP-1253447-A2 repräsentiert ein weiteres optisches Datenübertragungssystem nach dem Stand der Technik.

### ZUSAMMENFASSUNG DER ERFINDUNG

Es kann als eine Aufgabe der Erfindung werden, eine verbesserte Datenübertragung zwischen einer Vorrichtung und einem optischen Wartungsanschluss anzugeben.

Die Aufgabe der Erfindung wird mittels der Gegenstände der unabhängigen Ansprüche gelöst. Weitere Vorteile und Weiterbildungen der Erfindung sind in den abhängigen Ansprüchen angegeben.

Es sind ein optisches Datenübertragungssystem, ein Flugzeug mit einem optischen Datenübertragungssystem, die Verwendung eines optischen Datenübertragungssystems in einem Flugzeug und ein Verfahren zum Auslesen von Daten einer Vorrichtung gemäß den Merkmalen der unabhängigen Ansprüche angegeben.

Gemäß einem Ausführungsbeispiel der Erfindung ist ein optisches Datenübertragungssystem mit einer Vorrichtung, einem ersten optischen Wartungsanschluss und einem zweiten optischen Wartungsanschluss angegeben. Weiterhin weist das optische Datenübertragungssystem eine festkörpergebundene Datenleitung zur Übertragung von Daten mittels elektromagnetischer Energie zwischen der Vorrichtung und dem ersten optischen Wartungsanschluss und dem zweiten optischen Wartungsanschluss auf. Weiterhin ist die festkörpergebundene Datenleitung des optischen Datenübertragungssystems zwischen der Vorrichtung einerseits und dem ersten und zweiten optischen Wartungsanschluss andererseits durch einen Spalt unterbrochen.

Dabei kann in diesem und in jedem anderen Ausführungsbeispiel die Vorrichtung als Flugzeug und die Anschlüsse als optische Boden Test- oder Wartungsanschlüsse ausgeführt sein.

Die Erfindung schafft die Möglichkeit einer zweiten unabhängigen Diagnose, bei der direkt über den Bodenanschluss Software geladen werden kann, ohne die Geräte zum laden aus dem Flugzeug ausbauen zu müssen. Daher betrifft die Erfindung auch die Wartung. Es kann also im Rahmen der Erfindung im Rahmen der Wartung über den Anschluss Software upgedatet werden.

Die erfindungsgemäße festkörpergebundene Datenleitung lässt dabei eine Übermittlung von Daten zwischen einerseits der Vorrichtung und andererseits den optischen Wartungsanschlüssen zu. Auch ermöglicht die festkörpergebundene Datenleitung durch den Spalt eine Übermittlung von Daten zwischen dem ersten optischen Wartungsanschluss und dem zweiten optischen Wartungsanschluss. Dazu kann, falls gewünscht, neben dem Spalt in der festkörpergebundenen Datenleitung ein optischer Splitter in dem Datenübertragungssystem enthalten sein. Dies wird im Folgenden näher beschrieben werden.

Mit anderen Worten steht die Vorrichtung über die festkörpergebundene Datenleitung mit dem ersten und dem zweiten optischen Wartungsanschluss zur Übertragung von Daten mittels elektromagnetischer Energie in Verbindung. Mit anderen Worten kann trotz der einen Spalt aufweisenden festkörpergebundenen Datenleitung optische Energie sowohl von der Vorrichtung zum ersten und zum zweiten optischen Anschluss übermittelt werden, als auch vom ersten optischen Anschluss an den zweiten optischen Anschluss und umgekehrt übermittelt werden. Weiterhin ist die Vorrichtung durch ein Diagnosemodul oder Wartungsmodul auslesbar, was im Folgenden noch detaillierter beschrieben wird. Ein solches Diagnosemodul kann an einen der optischen Wartungsanschlüsse angeschlossen werden und Signale über die einen Spalt aufweisende festkörpergebundene Datenleitung an die Vorrichtung übermitteln oder von dieser Daten empfangen. Mit anderen Worten kann die Vorrichtung durch das optische Datenübertragungssystem mit einem Diagnosemodul optisch verbunden werden, so dass sich insgesamt ein Test-, Wartungs- oder Diagnosesystem für die Vorrichtung ergibt.

Durch die beiden optischen Wartungsanschlüsse ist eine parallele und simultane Auslesung von zwei Vorrichtungen oder von zwei Teilen der Vorrichtung möglich, was eine Zeitersparnis für den Benutzer bedeuten kann.

Dabei kann in diesem und in jedem anderen Ausführungsbeispiel die Vorrichtung als Luftfahrzeug, beispielsweise als Flugzeug ausgeführt sein. Weiterhin kann die Vorrichtung auch als ein Flugzeugsystem ausgeführt sein, das mittels eines zusätzlichen Diagnosemoduls über das bereitgestellte erfindungsgemäße optische Datenübertragungssystem ausgelesen werden kann. Dazu kann, falls gewünscht, ein entsprechendes Diagnosemodul gemäß einem weiteren Ausführungsbeispiel der Erfindung bereitgestellt werden.

Aufgrund des zweiten optischen Wartungsanschlusses ist es nun möglich, die Diagnosefähigkeit der auszulesenden bzw. zu überwachenden bzw. zu analysierenden Vorrichtung also beispielsweise des Flugzeuges durch ein weiteres unabhängiges System zu erhöhen. Auch wird aufgrund des erfindungsgemäßen Spaltes in der festkörpergebundenen Datenleitung eine Kommunikation zwischen dem ersten und dem zweiten optischen Wartungsanschluss ermöglicht.

Ebenso ist es aufgrund des erfindungsgemäßen Spaltes in der festkörpergebundenen Datenleitung möglich, den Datenaustausch bzw. die Kommunikation zwischen dem ersten optischen Wartungsanschluss und der Vorrichtung durch den zweiten optischen Wartungsanschluss aufzuzeichnen. Dabei kann die Kommunikation bzw. der Datenaustausch zwischen der Vorrichtung und dem ersten optischen Anschluss in zwei Arten von Datenaustausch unterschieden werden. In einer ersten Variante werden Daten von der Vorrichtung an den ersten optischen Wartungsanschluss bzw. an ein dort angeschlossenes Gerät gesendet. Dies kann als erste Richtung des Datenaustauschs bezeichnet werden. Die über den Spalt transmittierten optischen Signale werden aufgrund eines optischen Splitters aufgeteilt in einen Teil, der zu dem ersten optischen Wartungsanschluss propagiert, und einen zweiten Teil, der zu dem zweiten optischen Wartungsanschluss propagiert. Damit kann in diesem Fall des Datenaustauschs am zweiten optischen Wartungsanschluss aufgenommen werden, was ebenso in analoger Weise am ersten optischen Wartungsanschluss von der Vorrichtung ankommt. Als zweite Variante kann die Gegenrichtung betrachtet werden, in der von dem ersten optischen Wartungsanschluss oder einem Gerät, das daran angeschlossen ist, Daten bzw. Signale oder auch ein Signal an die Vorrichtung gesendet wird. Dieses von dem ersten optischen Wartungsanschluss gesendete Signal wird sowohl über den vorhandenen Spalt in der festkörpergebundenen Datenleitung transmittiert als auch aufgrund des dort sich befindenden Spaltes reflektiert. Dieser reflektierte Teil propagiert danach aufgrund des vorhandenen optischen Splitters einerseits wieder zurück zum ersten optischen Wartungsanschluss, aber eben auch zu dem zweiten optischen Wartungsanschluss. Damit ist es auch möglich, am zweiten optischen Wartungsanschluss die Signale aufzuzeichnen, die von dem ersten optischen Wartungsanschluss ausgehen.

Ebenso ist es möglich, aufgrund des vorhandenen Spaltes und der dort auftretenden gewünschten und gezielt eingesetzten Reflektion der elektromagnetischen Signale eine Kommunikation zwischen den beiden optischen Wartungsanschlüssen bzw. zwischen Geräten, die an diese beiden optischen Wartungsanschlüsse angeschlossen sind, zu erlauben. Dies wird im Folgenden noch detaillierter beschrieben.

Dabei kann der Spalt in diesem und in jedem anderen Ausführungsbeispiel ein Luftspalt sein. Jedoch ist es auch möglich, dass der Spalt als Änderung des Brechungsindexes ausgeführt ist und sich entlang eines Propagationspfades der elektromagnetischen Energie in der Datenleitung verschiedene Festkörpermaterialien aneinanderreihen. So kann beispielsweise erreicht werden, dass optimale Transmissions- und Reflektionseigenschaften an den entsprechenden Grenzschichten der unterscheidenden Materialien innerhalb der Datenleitung bestehen beziehungsweise entstehen. Beispielsweise kann in dem Spalt Zirkonia als Material verwendet werden. Mit anderen Worten wird eine Datenleitung gestellt, welche in einem spaltartigen Abschnitt ein Material aufweist, das sich hinsichtlich seines Brechungsindexes von der restlichen Datenleitung unterscheidet.

Dabei kann das Material Zirkonia in der Erfindung mehrere Anwendung finden. Neben Keramik kann Zirkonia als sehr temperaturkonstanter Abstandhalter in Form einer Klemmhülse verwendet werden. Diese dient zur Einstellung und Gewährung des Spaltes.

Weiterhin kann Zirkonia als Medium im Spalt wegen des sehr hohen Brechungsindex verwendet werden. Dies liefert eine gute Rückreflektion des elektromagnetischen Signals. Weiterhin kann Zirkonia als Zirkoniascheibe kombiniert als Medium in dem Spalt und gleichzeitig als Abstandhalter verwendet werden. Dies betrifft alle Ausführungsbeispiele der Erfindung.

In diesem und in jedem anderen Ausführungsbeispiel stellt der Spalt ein Transmissionsreflektor dar, der sowohl eine parallel Aufzeichnung des Vorgangs bzw. der Kommunikation zwischen der Vorrichtung und dem ersten optischen Wartungsanschluss ermöglicht, als auch die Kommunikation zwischen dem ersten und dem zweiten optischen Wartungsanschluss ermöglicht.

Dabei kann der Spalt beispielsweise eine Länge von 10 µm aufweisen. Jedoch ist auch eine Länge von 5 µm oder von 15 µm möglich. Auch andere Spaltlängen sind möglich. Die Spaltlänge bzw. Spaltbreite kann dabei wie bereits oben beschrieben, auf die verwendete optische Wellenlänge angepasst werden, so dass eventuell Auslöschungen durch Interferenz vermieden werden. Dies kann neben der Wellenlänge ebenso auf die verwendeten Materialien und die damit verwendeten Brechungsindizes abgestimmt werden. In dem Fall, dass optische Fasern, wie Glasfasern, zum Einsatz kommen, kann die Spaltlänge auch auf die numerische Apertur der Faser abgestimmt werden.

Weiterhin kann der Spalt der festkörpergebundenen Datenleitung auf die verwendete optische Wellenlänge abgestimmt sein. Da an jeder Grenzfläche unterschiedlicher Brechungsindizes Reflektionen stehen, kann der Abstand bzw. die Breite des Spalts auf diese optische Wellenlänge abgestimmt sein. Damit kann vermieden werden, dass sich optische Auslöschungen durch Interferenz ergeben, wenn solch ein erfindungsgemäßer Spalt vorgesehen wird. Weiterhin können in dem Spalt auch andere Materialien zum Einsatz kommen, wie beispielsweise Flüssigkeiten, aufgedampfte Metalle, Plexiglas oder Folien sowie auch Zirkonia.

Dabei können Materialien verwendet werden, die eine geringe Veränderungen bei Umgebungseinflüssen wie Temperaturschwankungen oder Luftfeuchtigkeit haben.

Bezüglich des Spaltes sei darauf hingewiesen, dass auch mehrere Spalte hintereinander, oder Materialkombinationen hintereinander vorhanden sein können. Beispielsweise kann die folgende Kombination verwendet werden: Glasfaser - Schicht aus einer Metallbedampfung - Luft - Schicht aus einer Metallbedampfung - Glasfaser. Aber auch Glasfaser - Zirkoniascheibe - Glasfaser ist möglich.

Dabei können beispielsweise Materialien verwendet werden, die eine geringe Veränderung bei Temperaturschwankungen aufweisen.

Mittels der hier angegebenen Erfindung kann eine kostengünstige Auslesung von Daten einer Vorrichtung bzw. eine kostengünstigen Diagnose einer Vorrichtung erfolgen. Im Vergleich zu der im Stand der Technik bekannten 3Y-Lösung ist das erfindungsgemäße optische Datenübertragungssystem von wesentlich kleinerer Baugröße und hat daher neben Vorteilen in der Dimension auch Vorteile hinsichtlich des Gewichts. Ebenso stellt sich das optische Datenübertragungssystem als äußerst robust heraus. Im Vergleich zum Stand der Technik hält die vorliegende Erfindung auch größeren Temperaturunterschieden stand, was insbesondere im militärischen Einsatz oder anderen Feldeinsätzen von erheblicher Bedeutung sein kann.

Gemäß einem Ausführungsbeispiel der Erfindung ist die festkörpergebundene Datenleitung zumindest unmittelbar vor und unmittelbar nach dem Spalt eine fiberoptische Datenleitung.

Mit anderen Worten besteht die optische Datenleitung zumindest teilweise aus einer Glasfaser, die optische Signale von der Vorrichtung zu den optischen Anschlüssen und umgekehrt übermitteln kann. Falls gewünscht, kann der Spalt mit Zirkonia als Material ausgefüllt sein, um die gewünschten Reflektions- und Transmissionseigenschaften innerhalb der festkörpergebundenen Datenleitung bereitzustellen.

Gemäß einem weiteren Ausführungsbeispiel der Erfindung weist die festkörpergebundene Datenleitung einen optischen Signalsplitter auf.

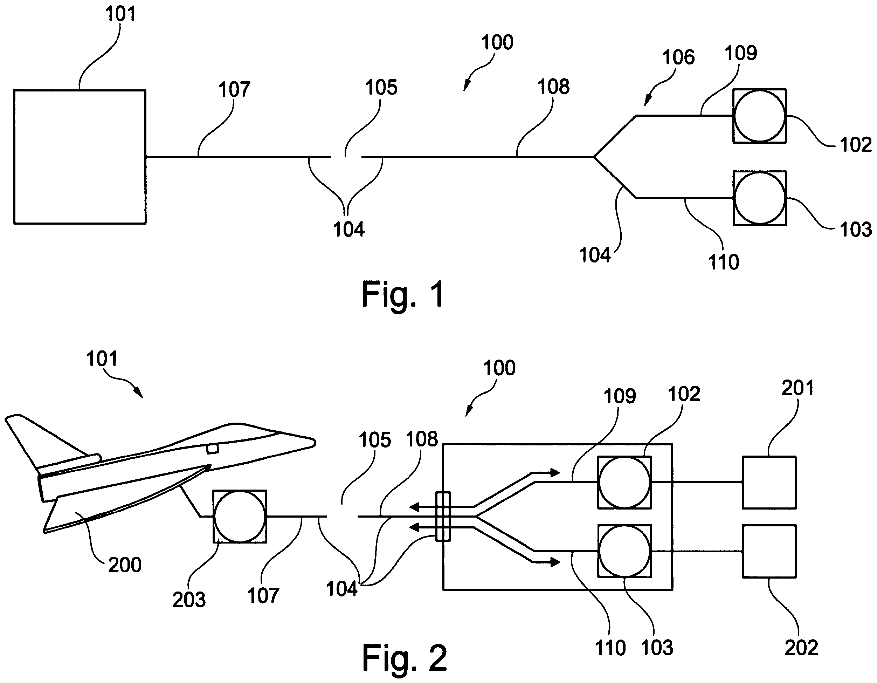

Dabei kann der optische Signalsplitter beispielsweise als Y-Koppler ausgeführt sein. Dieses Ausführungsbeispiel kann beispielsweise der Figur 1 entnommen werden. Der optische Signalsplitter ermöglicht, dass die Signale, die von der Vorrichtung kommen, in einen ersten Kanal der festkörpergebundenen Datenleitung geleitet werden und gleichzeitig in einen zweiten Kanal der festkörpergebundenen Datenleitung geleitet werden. Damit können sowohl der erste als auch der zweite optische Wartungsanschluss mit den von der Vorrichtung ausgesendeten Signalen versorgt werden. Ebenso sorgt der optische Signalsplitter dafür, dass die von einem optischen Wartungsanschluss ausgehenden elektromagnetischen Signale nicht nur an die Vorrichtung gesendet werden, sondern am Spalt rückreflektiert und dann in den jeweils anderen Kanal zum anderen optischen Wartungsanschluss eingekoppelt werden.

Gemäß einem weiteren Ausführungsbeispiel der Erfindung weist die festkörpergebundene Datenleitung ein erstes Stück Datenleitung zwischen der Vorrichtung und dem Spalt auf. Weiterhin weist die Datenleitung ein zweites Stück zwischen dem Spalt und dem optischen Signalsplitter auf. Weiterhin weist die optische Datenleitung ein drittes Stück zwischen dem optischen Signalsplitter und dem ersten optischen Wartungsanschluss auf und weist ein viertes Stück zwischen dem optischen Signalsplitter und dem zweiten optischen Wartungsanschluss auf.

Diese Architektur des Datenübertragungssystems kann beispielsweise der Figuren der entsprechenden nachfolgenden Figurenbeschreibung entnommen werden. Diese Architektur des Datenübertragungssystems erlaubt es, neben einer Erhöhung der Diagnosefähigkeit der Vorrichtung auch, die Kommunikation zwischen der Vorrichtung und dem ersten Wartungsanschluss am zweiten Wartungsanschluss aufzuzeichnen und zu protokollieren. Ebenso ist eine Datenübertragung bzw. Kommunikation zwischen dem ersten und dem zweiten optischen Wartungsanschluss aufgrund des optischen Datensplitters und der Kombination mit dem Spalt, der für Rückreflektionen sorgt, möglich.

Gemäß einem weiteren Ausführungsbeispiel der Erfindung ist das erste und das zweite Stück Datenleitung in Verbindung mit dem Spalt derart ausgeführt, dass bei einer Transmission von elektromagnetischer Energie über den Spalt eine Dämpfung der elektromagnetischen Energie auftritt, die ausgewählt ist aus der Gruppe bestehend aus 0,2 dB; 0,5 dB; 1,0 dB; 1,5 dB; 2,0 dB; 2,5 dB; 3,0 dB.

Da ein möglichst großer Teil des Signals transmittiert werden soll, ist eine Dämpfung im oben genannten Bereich für dieses Ausführungsbeispiel sinnvoll. Dabei kann mittels des Brechungsindexes des ersten und des zweiten Stück Datenleitung und mittels des Brechungsindexes dazwischen in der Region des Spaltes bestimmt werden, wie hoch die Transmissionsrate für ein elektromagnetisches Signal ist. Ebenso kann diese Transmissionsrate durch die Breite des Spaltes beeinflusst werden. Die verwendeten Brechungsindizes und die Spaltbreite sind bei gegebener Wellenlänge daraufhin abgestimmt, dass der gewünschte Dämpfungswert bezüglich der Transmission von elektromagnetischer Energie über den Spalt erreicht wird. Mit anderen Worten ist in diesem Ausführungsbeispiel das erste und das zweite Stück Datenleitung in Verbindung mit dem Spalt und in Verbindung mit der verwendeten Wellenlänge derart ausgeführt, dass sich bezüglich der Transmission eine Dämpfung im oben angegebenen Bereich ergibt.

Dabei kann vorzugsweise eine fiberoptische Datenleitung in Verbindung mit beispielsweise 800 nm Wellenlänge verwendet werden. Jedoch sind auch andere Kombinationen von Datenleitungen und Wellenlängen möglich. Falls gewünscht, kann Zirkonia als Material in dem Spalt verwendet werden. Dies hat besondere Vorteile, Datenaustausch Zirkonia bei Temperaturänderungen äußert geringe Veränderungen zeigt und somit eine stabile Datenübertragung ermöglicht. Jedoch wird der Bereich der Erfindung nicht verlassen, wenn andere, von Zirkonia abweichende Materialien in dem Spalt verwendet werden.

Gemäß einem weiteren Ausführungsbeispiel der Erfindung sind das erste und das zweite Stück Datenleitung in Verbindung mit dem Spalt derart ausgeführt, dass bei einer Reflektion von elektromagnetischer Energie, die von einem optischen Wartungsanschluss kommend an dem Spalt reflektiert wird, eine Dämpfung der elektromagnetischen Energie auftritt, die ausgewählt ist aus der Gruppe bestehend aus 6 dB; 6,5 dB; 7,0 dB; 7,5 dB; 8,0 dB; 8,5 dB; 9,0 dB; 9,5 dB; 10,0 dB; 10,5 dB, 11 dB; 11,5 dB; 12, dB; 12,5 dB; 13,0 dB; 13,5 dB; und 14,0 dB.

Mit anderen Worten werden das erste und das zweite Stück Datenleitung hinsichtlich ihrer Brechungsindizes in Verbindung mit der Spaltbreite und dem Spaltmaterial hinsichtlich seines Brechungsindexes auf die verwendete Wellenlänge abgestimmt, so dass das oben angegebene Maß an Dämpfung der Reflektion eintritt. Diese Auswahl trifft der Fachmann ohne technische Hürden, ohne den Bereich der Erfindung zu verlassen.

Gemäß einem weiteren Ausführungsbeispiel der Erfindung weist das optische Datenübertragungssystem ein Diagnosemodul zum Anschluss an zumindest einen der beiden optischen Wartungsanschlüsse auf, wobei das Diagnosemodul zur Durchführung eines Tests der Vorrichtung ausgeführt ist.

Mit anderen Worten wird damit ein Diagnosesystem für die Vorrichtung bereitgestellt. Ebenso kann an dem zweiten optischen Wartungsanschluss ein Aufnahmemodul angeschlossen sein, um die am ersten Wartungsanschluss durchgeführte Wartungsmaßnahme aufzuzeichnen und zu protokollieren.

Durch die beiden optischen Wartungsanschlüsse ist eine parallele und simultane Auslesung von zwei Vorrichtungen oder von zwei Teilen der Vorrichtung möglich, was eine Zeitersparnis für den Benutzer oder gegenseitige Kontrolle des Datenflusses und damit Erhöhung der Sicherheit bedeuten kann.

Gemäß einem weiteren Ausführungsbeispiel der Erfindung ist ein Flugzeug mit einem optischen Datenübertragungssystem angegeben, wie es im Vorangegangenen oder Nachstehenden beschrieben ist.

Gemäß einem weiteren Ausführungsbeispiel der Erfindung ist die Verwendung eines optischen Datenübertragungssystems, wie es im Vorangegangenen oder Nachstehenden beschrieben ist, in einem Flugzeug angegeben.

Gemäß einem weiteren Ausführungsbeispiel der Erfindung ist ein Verfahren zum Auslesen von Daten einer Vorrichtung angegeben. Dabei weist das Verfahren die als ersten Schritt das Vorsehen eines Spaltes in einer festkörpergebundenen Datenleitung auf, wobei sich die Datenleitung zwischen einer Vorrichtung einerseits und einem ersten und einem zweiten optischen Wartungsanschluss andererseits befindet. Weiterhin weist das Verfahren das Übermitteln eines elektromagnetischen Signals zwischen der Vorrichtung und dem ersten optischen Wartungsanschluss über die festkörpergebundene Datenleitung auf. Dabei kann die Übermittlung in einer ersten Richtung von der Vorrichtung zu dem ersten optischen Wartungsanschluss erfolgen und kann in einer zweiten Richtung von dem ersten optischen Wartungsanschluss zu der Vorrichtung erfolgen. Als weiteren Schritt weist das Verfahren das Detektieren eines über den Spalt transmittierten elektromagnetischen Signals an dem zweiten optischen Wartungsanschluss auf, falls die Übermittlung in die erste Richtung erfolgt. Im Falle der Übermittlung in die zweite oben angegebene Richtung erfolgt das Detektieren eines an dem Spalt reflektierten elektromagnetischen Signals an dem zweiten optischen Wartungsanschluss.

Dabei kann das Detektieren durch den optischen Wartungsanschluss oder durch ein Gerät, das an den optischen Wartungsanschluss angeschlossen ist, erfolgen.

Mit anderen Worten ist damit ein Verfahren bereitgestellt, welches es ermöglicht, eine Vorrichtung schnell und sicher auszulesen. Da der Auslesevorgang bzw. der Wartungs- oder Diagnosevorgang gleichzeitig an dem zweiten optischen Wartungsanschluss aufgezeichnet werden kann, können eventuelle Fehler bei der Durchführung des Wartung oder der Diagnose entdeckt und an den Benutzer weitergegeben werden. Dies kann beispielsweise mittels optischer oder akustischer Warnsignale an den Benutzer erfolgen. Damit wird ein kostengünstiges und technisch einfach zu installierendes Verfahren bereitgestellt, das mit geringer Dämpfung auskommt und nur wenig zusätzliche Datenleitung im Vergleich zum Stand der Technik benötigt. Dazu kann beispielsweise, falls gewünscht, ein optischer Splitter, wie in Y-Koppler eingesetzt werden. Aufgrund der Detektion der Signale in dem zweiten Kanal des zweiten optischen Wartungsanschlusses, welchen zweiten Kanal der optische Splitter bereitstellt, kann ein Aufzeichnen der Kommunikation zwischen der Vorrichtung und dem ersten optischen Wartungsanschluss in Echtzeit erfolgen.

Gemäß einem weiteren Ausführungsbeispiel weist das Verfahren die Bereitstellung einer Vorrichtung, eines ersten optischen Wartungsanschlusses und eines zweiten optischen Wartungsanschlusses auf. Weiterhin weist das Verfahren die Bereitstellung einer festkörpergebundenen Datenleitung zur Übertragung von Daten mittels elektromagnetischer Energie zwischen der Vorrichtung und dem ersten optischen Wartungsanschluss und dem zweiten optischen Wartungsanschluss auf.

Dabei kann dieses und jedes andere Ausführungsbeispiel der Erfindung als ein Fehlerdiagnoseverfahren zur Untersuchung von Flugzeugen mittels eines Diagnosemoduls und mittels der bereits beschriebenen Verfahrensschritte ausgeführt sein.

Gemäß einem weiteren Ausführungsbeispiel der Erfindung weist das Verfahren den Schritt Aufzeichnen eines durch den Spalt transmittierten oder am Spalt reflektierten elektromagnetischen Signals an dem zweiten optischen Wartungsanschluss auf. Dadurch erfolgt eine Kontrolle der Kommunikation zwischen dem ersten optischen Wartungsanschluss und der Vorrichtung durch die Detektion der am zweiten optischen Wartungsanschluss eingehenden elektromagnetischen Signale.

Mit anderen Worten kann damit ein Mitschneiden, Mithören oder Abhören der Kommunikation bzw. des Datenaustausches in dem ersten optischen Wartungsanschluss und der Vorrichtung erfolgen. Dabei kann das in Echtzeit durchgeführt werden. Ebenso wird damit eine Eigendiagnose der Vorrichtung in Echtzeit ermöglicht. Dabei kann jegliche Art der Datenübertragung wie beispielsweise Frequenz-, Wellenlängen- oder Amplitudenmodulation verwendet werden. Ebenso kann dies als Diagnosemöglichkeit für optische Switches gesehen werden, in der überprüft wird, ob die Switches richtig geschaltet sind.

Gemäß einem weiteren Ausführungsbeispiel der Erfindung weist das Verfahren den Schritt Kommunizieren zwischen dem ersten optischen Wartungsanschluss und dem zweiten optischen Wartungsanschluss mittels eines am Spalt reflektierten elektromagnetischen Signals auf.

Mit anderen Worten erfolgt das hier beschriebene Kommunizieren mittels der Aussendung eines optischen Signals durch einen der optischen Wartungsanschlüsse bzw. durch ein Gerät, welches an einem der optischen Wartungsanschlüsse angeschlossen ist. Aufgrund der Brechungsindex-Veränderung an dem erfindungsgemäßen Spalt wird ein vordefinierter Teil dieses Signals dort reflektiert und an den jeweils anderen optischen Wartungsanschluss bzw. das dort angeschlossene Gerät gesendet. Mit anderen Worten kann der Spalt mit seiner Brechungsindex-Änderung dazu ausgenutzt werden, um einen Teil des Signals durch den Spalt zu transmittieren und einen Teil des Signals an dem Spalt zu reflektieren. Dadurch wird es ermöglicht, dass der erste optische Wartungsanschluss bzw. ein dort angeschlossenes Gerät den zweiten optischen Wartungsanschluss bzw. ein dort angeschlossenes Gerät regelt oder steuert.

Im Folgenden werden mit Verweis auf die Figuren bevorzugte Ausführungsbeispiele der Erfindung beschrieben.

### KURZE BESCHREIBUNG DER FIGUREN

Figuren 1 bis 3 zeigen schematische, zweidimensionale Darstellungen von optischen Datenübertragungssystemen gemäß unterschiedlicher Ausführungsbeispiele der Erfindung.
Figuren 4 bis 6 zeigen Flussdiagramme von Verfahren gemäß unterschiedlicher Ausführungsbeispiele der Erfindung.
Figur 7 zeigt eine schematische, zweidimensionale Darstellung eines optischen Datenübertragungssystems gemäß einem Ausführungsbeispiel der Erfindung.
Fig. 8 zeigt schematische, zweidimensionale Darstellung einer Hülse zur Herstellung eines Spaltes gemäß einem Ausführungsbeispiel der Erfindung.
Fig. 9 zeigt schematische, zweidimensionale Darstellung eines Abstandsrings und einer Scheibe zur Herstellung eines Spaltes gemäß einem Ausführungsbeispiel der Erfindung.
Fig. 10 zeigt schematische, zweidimensionale Darstellung einer Zirkoniahülse zur Herstellung eines Spaltes gemäß einem Ausführungsbeispiel der Erfindung.

Die Darstellungen in den Figuren sind schematisch und nicht maßstäblich. In den Figurenbeschreibungen werden für die gleichen oder ähnlichen Elemente die gleichen Bezugsziffern verwendet. Die vorliegende Erfindung lässt sich grundsätzlich für verschiedene Vorrichtungen nutzen und ist nicht auf die angegebene Kombination der Merkmale des Patentanspruchs 1 und der abhängigen Patentansprüche beschränkt. Es ergeben sich darüber hinaus weitere Möglichkeiten, wenn einzelne Merkmale aus den Patentansprüchen mit der nachfolgenden Beschreibung der Ausführungsbeispiele miteinander kombiniert werden. Außerdem soll die Bezugnahme der Patentansprüche auf die Zeichnungen durch die Verwendung von Bezugszeichen den Schutzumfang der Patenansprüche auf keinen Fall auf die dargestellten Ausführungsbeispiele beschränken.

### DETAILLIERTE BESCHREIBUNG VON AUSFÜHRUNGSBEISPIELEN

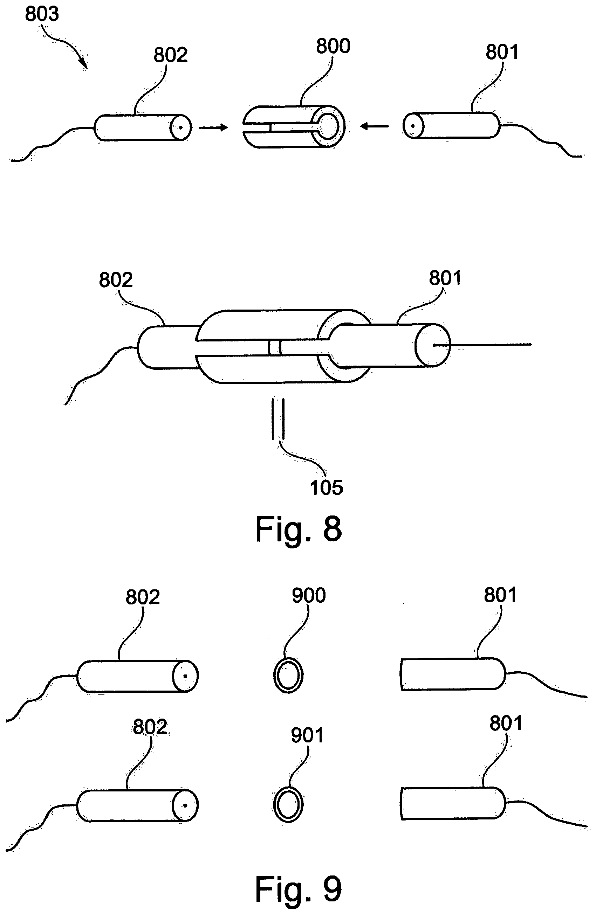

Figur 1 zeigt ein optisches Datenübertragungssystem 100 mit einer Vorrichtung 101, einem ersten optischen Wartungsanschluss 102 und einem zweiten optischen Wartungsanschluss 103. Weiterhin weist das optische Datenübertragungssystem eine festkörpergebundene Datenleitung 104 zur Übertragung von Daten mittels elektromagnetischer Energie zwischen der Vorrichtung 101 und dem ersten optischen Wartungsanschluss 102 und dem zweiten optischen Wartungsanschluss 103 auf. Diese festkörpergebundene Datenleitung ist hier als faseroptische Datenleitung ausgeführt. Dabei ist die festkörpergebundene Datenleitung 104 zwischen der Vorrichtung einerseits und dem ersten und dem zweiten optischen Wartungsanschluss andererseits durch den Spalt 105 unterbrochen. In dem hier gezeigten Ausführungsbeispiel ist der Spalt, hier als Unterbrechung 105 dargestellt, mit Luft als Material in dem Spalt und Zirkonia als Abstandhülse zwischen den Glasfaserstücken der Datenleitung ausgeführt. Dabei kann der Abstandshalter in Form einer Klemmhülse, oder Scheibe oder Abstandring ausgeführt sein. Dies kann den nachfolgenden Figuren 8 bis 11 entnommen werden.

Dabei kann die Vorrichtung 101 beispielsweise als ein System eines Flugzeuges oder auch das ganzes Flugzeug ausgeführt sein. Weiterhin ist ein optischer Signalsplitter 106 gezeigt, welcher das optische Signal, das sich in der Figur 1 von links nach rechts in dem zweiten Stück 108 der Datenleitung bewegt, in Signale in die beiden Stücke 109 und 110 der Datenleitung aufteilt. Die hier gezeigte Architektur des Datenübertragungssystems weist ein erstes Stück 107 der Datenleitung zwischen der Vorrichtung und dem Spalt auf. Ein zweites Stück 108 der Datenleitung befindet sich zwischen dem Spalt und dem optischen Signalsplitter. Das dritte Stück 109 der festkörpergebundenen Datenleitung befindet sich zwischen dem optischen Signalsplitter und dem ersten optischen Wartungsanschluss. Das vierte festkörpergebundene Stück der Datenleitung befindet sich zwischen dem optischen Signalsplitter und dem zweiten optischen Wartungsanschluss. Aufgrund der Kombination des optischen Signalsplitters 106, der auch als Y-Koppler bezeichnet werden kann, und dem Spalt 105, der eine Brechungsindex-Änderung beinhaltet, kann sowohl die Kommunikation zwischen der Vorrichtung 101 und dem ersten optischen Wartungsanschluss 102 an dem zweiten optischen Wartungsanschluss 103 aufgezeichnet werden. Weiterhin kann durch diese erfindungsgemäße Kombination eine Kommunikation zwischen den beiden optischen Wartungsanschlüssen ermöglicht werden.

Figur 2 zeigt ein weiteres Ausführungsbeispiel eines optischen Datenübertragungssystems 100 gemäß der vorliegenden Erfindung. Als Vorrichtung 101 ist hier der optische Datenverteiler in einem Flugzeug 200 gezeigt, welches einen optischen Wartungsanschluss 203 aufweist. Bezugszeichen 203 ist der optische Bodenanschluss für die Wartung. Dies ist ein Stecker der nur am Boden zugänglich ist, um für den Zweck von Wartung, was auch Test und/oder Softwareupdates beinhaltet, einen Anschluss an die Datenbusse des Flugzeuges herzustellen. Dies kann auch als Ground Test Port oder Central Loading Port bezeichnet werden.

Es ist in analoger Weise zu der Figur 1 ein erster optischer Wartungsanschluss 102 und ein zweiter optischer Wartungsanschluss 103 gezeigt. Ebenso ist eine festkörpergebundene Datenleitung 104 mit einem Spalt 105 gezeigt. Das erste Stück 107, das zweite Stück 108, das dritte Stück 109, und das vierte Stück 110 der festkörpergebundenen Datenleitung 104 sind in dem Flugzeug 200 in analoger Weise zu dem Datenübertragungssystem 100 der Figur 1 ausgebildet. Zusätzlich sind ein Diagnosemodul 201 gezeigt, welches zur Auslesung des Computersystems bzw. zur Diagnose des Flugzeugs ausgeführt ist. Weiterhin ist ein Aufnahmemodul 202 gezeigt, das an dem zweiten optischen Wartungsanschluss 103 angeschlossen ist. Dieses Modul 202 ist in der Lage, die Kommunikation zwischen dem Flugzeug 200 und dem Diagnosemodul 201 in Echtzeit aufzuzeichnen und kann ebenso, falls gewünscht, durch die Kombination des verwendeten optischen Splitters und des Spalts mit dem Diagnosemodul 201 kommunizieren. Dies kann auch in umgekehrter Weise erfolgen.

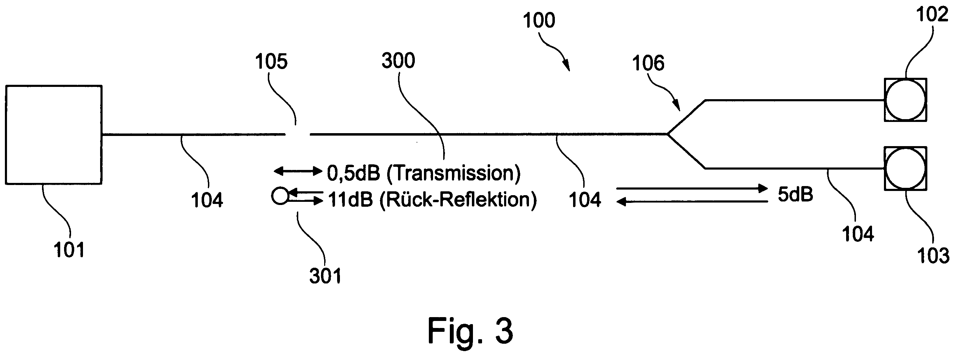

Gemäß einem weiteren Ausführungsbeispiel der Erfindung zeigt Figur 3 ein optisches Datenübertragungssystem 100, das einen Spalt 105 aufweist und ebenso einen optischen Signalsplitter 106 aufweist. Die festkörpergebundene Datenleitung 104 übermittelt wie in den bereits bezüglich Figuren 1 und 2 beschriebenen Ausführungsbeispielen die elektromagnetischen Signale von der Vorrichtung 101 zu und von den optischen Wartungsanschlüssen 102 und 103. Dabei sind beispielhafte Werte für die Transmission an dem Spalt mit dem Bezugszeichen 300 für die Reflektion an dem Spalt mit Bezugszeichen 301 gekennzeichnet, welche typische werte für einen einfachen Luftspalt darstellen.

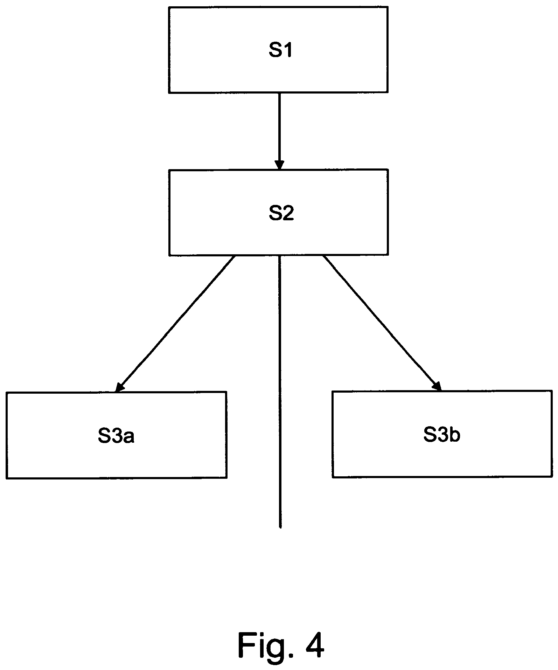

Figur 4 zeigt ein Flussdiagramm eines Verfahrens zum Auslesen von Daten einer Vorrichtung, wie beispielsweise einem Flugzeug, gemäß einem Ausführungsbeispiel der Erfindung. Das dort gezeigte Verfahren weist als Schritt S1 das Vorsehen eines Spaltes in einer festkörpergebundenen Datenleitung auf, wobei sich die Datenleitung zwischen einer Vorrichtung einerseits und einem ersten und zweiten optischen Wartungsanschluss andererseits befindet. Das Verfahren weist weiterhin als Schritt S2 das Übermitteln eines elektromagnetischen Signals zwischen der Vorrichtung und dem ersten optischen Wartungsanschluss über die festkörpergebundene Datenleitung auf. Dabei kann die Übermittlung in einer ersten Richtung von der Vorrichtung zu dem ersten optischen Wartungsanschluss erfolgen, und die Übermittlung kann in einer zweiten Richtung von dem ersten optischen Wartungsanschluss zu der Vorrichtung erfolgen. Das erfindungsgemäße Verfahren weist dabei zwei unterschiedliche dritte Schritte S3a und S3b auf, die wie später beschrieben wird, auch kombiniert werden können, falls dies gewünscht ist. Im Schritt S3a wird das Detektieren eines über den Spalt transmittierten elektromagnetischen Signals an dem zweiten optischen Wartungsanschluss angegeben, für den fall dass die Übermittlung in die oben angegebene erste Richtung erfolgt. Erfolgt jedoch die Übermittlung in die zweite, oben angegebene Richtung, so ist der Schritt S3b in dem erfindungsgemäßen Verfahren enthalten, welcher Schritt das Detektieren eines an dem Spalt reflektierten elektromagnetischen Signals an dem zweiten optischen Wartungsanschluss angibt.

Ebenso kann mit diesem erfindungsgemäßen Verfahren ein von dem ersten optischen Wartungsanschluss ausgesendetes Signal, das zu der Vorrichtung 101 transmittiert wird, jedoch auch an dem Spalt 105 reflektiert wird, ebenso durch die Vorsehung des Spaltes und des optischen Kopplers an dem zweiten optischen Wartungsanschluss detektiert werden. Damit kann also zwischen den beiden Wartungsanschlüssen eine Kommunikation bereitgestellt werden, und es kann gleichzeitig Kommunikation zwischen der Vorrichtung und dem ersten Wartungsanschluss an dem zweiten Wartungsanschluss dokumentiert und aufgezeichnet werden. Dies kann die Sicherheit des Diagnoseverfahrens an einem Flugzeug erhöhen.

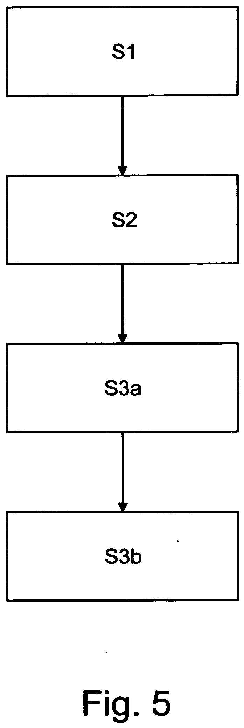

Figur 5 zeigt ein weiteres Flussdiagramm eines Verfahrens zum Auslesen von Daten einer Vorrichtung, welches Verfahren vier Schritte S1, S2, S3a, S3b aufweist. Dabei entsprechen die Schritte S1, S2, S3a und S3b den zuvor bezüglich Figur 4 angegebenen Verfahrensschritten. Jedoch ist in diesem Ausführungsbeispiel der Figur 4 gezeigt, dass das erfindungsgemäße Verfahren auch eine Kombination der Schritte S3a und S3b zulässt. Mit anderen Worten ist das erfindungsgemäße Verfahren in der Lage, jegliche Kommunikation zwischen der Vorrichtung und dem ersten optischen Wartungsanschluss aufzuzeichnen.

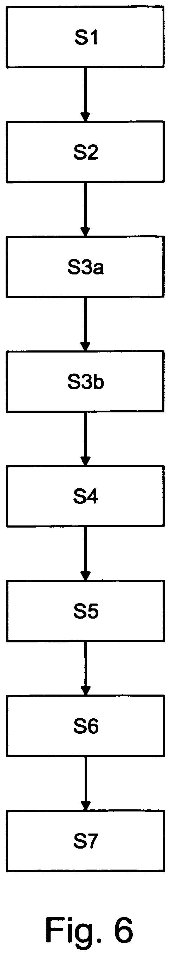

Gemäß einem weiteren Ausführungsbeispiel der Erfindung ist in Figur 6 ein Flussdiagramm eines Verfahrens zum Auslesen von Daten einer Vorrichtung angegeben. Dabei sind die ersten vier Verfahrensschritte S1 bis S3b in analoger Weise zu dem Ausführungsbeispiel der Figur 5 angegeben, worauf hierin Bezug genommen wird. Der weitere Verfahrensschritt S4 beinhaltet das Bereitstellen einer Vorrichtung, eines ersten optischen Wartungsanschlusses und eines zweiten optischen Wartungsanschlusses. Weiterhin beinhaltet der Schritt S5 das Bereitstellen einer festkörpergebundenen Datenleitung zur Übertragung von Daten mittels elektromagnetischer Energie zwischen der Vorrichtung und dem ersten optischen Wartungsanschluss und dem zweiten optischen Wartungsanschluss. Im Verfahrensschritt S6 wird ein durch den Spalt transmittiertes oder am Spalt reflektiertes elektromagnetisches Signal an dem zweiten optischen Wartungsanschluss aufgezeichnet. Dadurch erfolgt eine Kontrolle der Kommunikation zwischen dem ersten optischen Wartungsanschluss und der Vorrichtung. Mittels des Schrittes S7 wird das Kommunizieren zwischen dem ersten optischen Wartungsanschluss und dem zweiten optischen Wartungsanschluss mittels eines am m Spalt reflektierten elektromagnetischen Signals erreicht. Mit anderen Worten wird hier ein Verfahren zum Diagnostizieren von Fehlern, beispielsweise an einem Flugzeug, bereitgestellt, das mittels eines Spalts bzw. eines Transmissionsreflektors die oben genannten Vorteile verwirklicht.

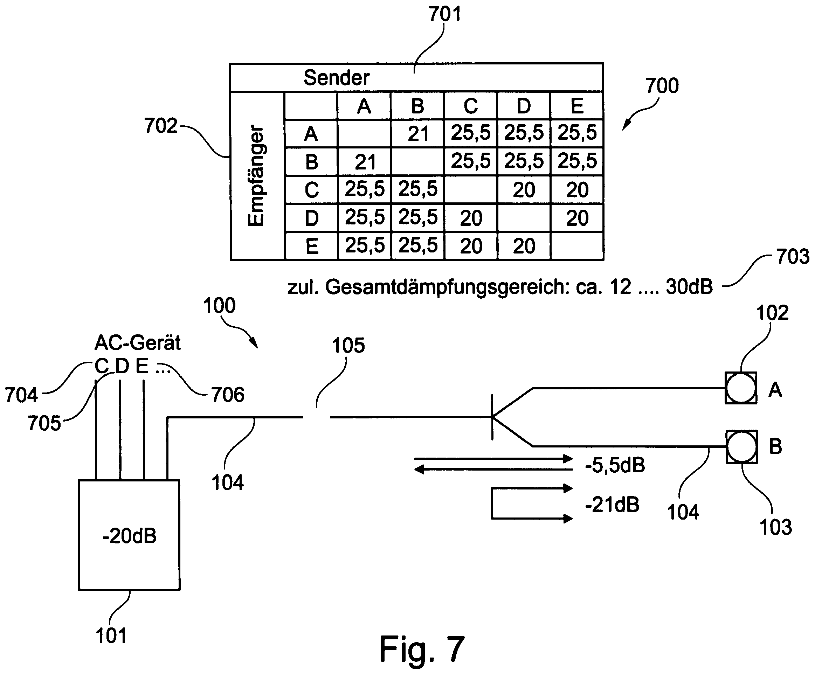

In Figur 7 ist ein optisches Datenübertragungssystem 100 gezeigt, welches eine Vorrichtung 101 aufweist. Dabei enthält die Vorrichtung 101 mehrere Geräte 704, 705 und 706 die durch eine optische Datenverteiler verbunden sind. Diese Geräte 704, 705 und 706 können durch die festkörpergebundene Datenleitung 104 von den optischen Wartungsanschlüssen 102 und 103 bzw. von dort angeschlossenen Gerätes ausgelesen werden. Aufgrund des Spaltes 105 kann dies am jeweils dazu parallel liegenden optischen Wartungsanschluss detektiert und aufgezeichnet werden. Falls gewünscht, kann auch eine parallele und synchrone Auslesung von zwei Geräten 704, 705 und 706 erfolgen, da zwei optische Wartungsanschlüsse zur Verfügung stehen. Weiterhin ist eine Tabelle 700 gezeigt, in welcher beispielhaft Dämpfungswerte für jeweils eine Sender- und Empfängersituation für die optischen Wartungsanschlüsse 102 und 103 dargestellt sind. Diese sind hier mit A und B angegeben. Die jeweiligen Flugzeug internen Geräte sind mit C, D und E... dargestellt. Beispielhaft ist ebenso ein zulässiger Gesamtdämpfungsbereich angegeben, der sich hier beispielhaft zwischen dem Wert 12 dB und 30 dB erstreckt. Dieser zulässige Gesamtdämpfungsbereich ist mit Bezugszeichen 703 dargestellt. Die Sender sind mit 701 und die Empfänger mit 702 dargestellt. Da in diesem und in jedem anderen Ausführungsbeispiel der Erfindung die festkörpergebundene Datenleitung und damit das optische Datenübertragungssystem zur bidirektionalen Datenübertragung ausgeführt ist, ist jedes der Elemente A, B, C, D und E als Empfänger und auch als Sender dargestellt.

Die in Figur 7 genannten Werte sind beispielhaft und können variiert werden ohne den Kern der Erfindung zu verlassen. Für ein Ausführungsbeispiel der Erfindung mit den folgenden Eigenschaften können sich die in Fig. 7 genannten Werte als vorteilhaft erweisen: 810 nm Wellenlänge, ein einfacher Luftspalt mit 15 Mikrometer Länge, als Glasfaser eine Multimode 200/280 Mikrometerm mit einer numerischen Apertur von 0,24. Bei 101 handelt es sich um einen im Flugzeug verbauten sogenannten Sternkoppler mit typisch 20 dB Dämpfung. Aber auch andere Werte für die Dämpfung sind an einem solchen Sternkoppler möglich, falls gewünscht.

Fig. 8 zeigt schematische, zweidimensionale Darstellung einer Hülse 800 zur Herstellung eines Spaltes 105. Dabei ist die hier gezeigte Hülse 800 aus Zirkonia gefertigt. Ebenso ist gezeigt dass die festkörpergebundene Datenleitung 803 zwischen der Vorrichtung (nicht gezeigt) einerseits und dem ersten und zweiten optischen Wartungsanschluss (nicht gezeigt) andererseits durch den Spalt 105 unterbrochen ist. Weiterhin sind die beiden Enden 801 und 802 festkörpergebundene Datenleitung gezeigt. Diese sind am Ende ebenfalls aus Zirkonia gefertigt. Falls gewünscht sind auch andere Materialkombinationen möglich. Falls gewünscht können die beiden Enden mit der Hülse verklebt werden, um dauerhaft den Spalt 105 zu erzeugen.

Fig. 9 zeigt schematische, zweidimensionale Darstellung eines Abstandsrings 900, der beispielsweise aus Zirkonia oder einer Kunststofffolie gefertigt sein kann, zur Herstellung eines Spaltes. Auch kann die Hülse aus Keramik sein. Auch kann die Hülse aus einer metallisierten Kunststofffolie bestehen. Dies kann besonders von Vorteil sein wenn kurzlebige Aufbauten mit hoher Durchgangsdämpfung und niedriger Rückreflektion gebraucht werden. Auch ist eine Scheibe 901 zur Herstellung eines Spaltes gezeigt.

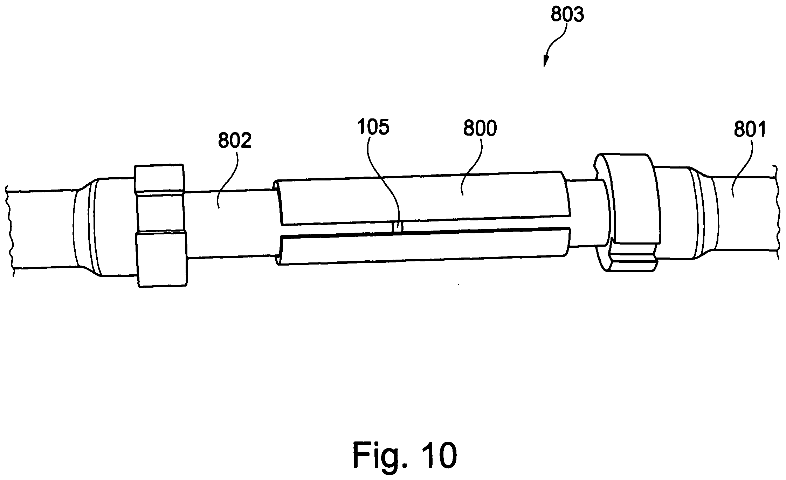

Fig. 10 zeigt schematische, zweidimensionale Darstellung einer Zirkoniahülse 800 zur Herstellung eines Spaltes 105 gemäß einem Ausführungsbeispiel der Erfindung. Es sind auch die Enden 801 und 802 der festkörpergebundene Datenleitung 803 gezeigt. Falls gewünscht kann anstatt Luft zum Beispiel auch Zirkonia als Spaltmaterial verwendet werden.

## Patentansprüche

1. Optisches Datenübertragungssystem (100) aufweisend
eine Vorrichtung (101),
einen ersten optischen Wartungsanschluss (102),
einen zweiten optischen Wartungsanschluss (103),
eine festkörpergebundene Datenleitung (104) zur Übertragung von Daten mittels elektromagnetischer Energie zwischen der Vorrichtung und dem ersten optischen Wartungsanschluss und dem zweiten optischen Wartungsanschluss,
wobei die festkörpergebundene Datenleitung zwischen der Vorrichtung einerseits und dem ersten und zweiten optischen Wartungsanschluss andererseits durch einen Spalt (105) unterbrochen ist,
wobei die festkörpergebundene Datenleitung (104) einen optischen Signalsplitter (106) aufweist, und
wobei sich zwischen dem Spalt (105) und dem optischen Signalsplitter (106) ein Stück festkörpergebundene Datenleitung (104) befindet;
wobei das Optische Datenübertragungssystem (100) eingerichtet ist zur Übermittlung eines elektromagnetischen Signals zwischen der Vorrichtung (101) und dem ersten optischen Wartungsanschluss über die festkörpergebundene Datenleitung (104),
wobei die Übermittlung in einer ersten Richtung von der Vorrichtung (101) zu dem ersten optischen Wartungsanschluss erfolgen kann und wobei die Übermittlung in einer zweiten Richtung von dem ersten optischen Wartungsanschluss zu der Vorrichtung (101) erfolgen kann;
wobei das Optische Datenübertragungssystem (100) weiter eingerichtet ist zur Detektion eines über den Spalt (105) transmittierten elektromagnetischen Signals an dem zweiten optischen Wartungsanschluss falls die Übermittlung in die erste Richtung erfolgt; und
eingerichtet ist zur Detektion eines an dem Spalt reflektierten elektromagnetischen Signals an dem zweiten optischen Wartungsanschluss falls die Übermittlung in die zweite Richtung erfolgt.

2. Optisches Datenübertragungssystem nach Anspruch 1,
wobei die festkörpergebundene Datenleitung zumindest unmittelbar vor und unmittelbar nach dem Spalt eine fiberoptische Datenleitung ist.

3. Optisches Datenübertragungssystem nach Anspruch 1 oder 2,
wobei ein erstes Stück (107) und ein zweites Stück (108) der Datenleitung (104) in Verbindung mit dem Spalt derart ausgeführt sind, dass bei einer Transmission von elektromagnetischer Energie über den Spalt eine Dämpfung der elektromagnetischen Energie auftritt, die ausgewählt ist aus der Gruppe bestehend aus 0,2 dB; 0,5 dB; 1,0 dB; 1,5 dB; 2,0 dB; 2,5 dB; 3,0 dB.

4. Optisches Datenübertragungssystem nach einem der Ansprüche 1 bis 3, wobei ein erstes Stück (107) und ein zweites Stück (108) der Datenleitung (104) in Verbindung mit dem Spalt derart ausgeführt sind, dass bei einer Reflektion von elektromagnetischer Energie, die von einem optischen Wartungsanschluss kommend an dem Spalt reflektiert wird, eine Dämpfung der elektromagnetischen Energie auftritt, die ausgewählt ist aus der Gruppe bestehend aus 6 dB; 6,5 dB; 7,0 dB; 7,5 dB; 8,0 dB; 8,5 dB; 9,0 dB; 9,5 dB; 10,0 dB; 10,5 dB, 11 dB; 11,5 dB; 12,0dB; 12,5 dB; 13,0 dB; 13,5 dB; und 14,0 dB.

5. Optisches Datenübertragungssystem nach einem der Ansprüche 1 bis 4, wobei der Spalt (105) Luft. Zirkonia oder ein anderweitiges Material aufweist, das eine Änderung des Brechungsindexes bewirkt.

6. Luftfahrzeug mit einem optischen Datenübertragungssystem nach einem der Ansprüche 1 bis 5.

7. Verwendung eines optischen Datenübertragungssystems nach einem der Ansprüche 1 bis 5 in einem Luftfahrzeug.

8. Verfahren zum Auslesen von Daten einer Vorrichtung, das Verfahren aufweisend die Schritte,
Vorsehen eines Spaltes in einer festkörpergebundenen Datenleitung, die sich zwischen einer Vorrichtung einerseits und einem ersten und zweiten optischen Wartungsanschluss andererseits befindet (S1),
Vorsehen eines optischen Signalsplitters in der festkörpergebundenen Datenleitung, wobei sich zwischen dem Spalt und dem optischen Signalsplitter ein Stück festkörpergebundene Datenleitung befindet,
Übermitteln eines elektromagnetischen Signals zwischen der Vorrichtung und dem ersten optischen Wartungsanschluss über die festkörpergebundene Datenleitung (S2),
wobei die Übermittlung in einer ersten Richtung von der Vorrichtung zu dem ersten optischen Wartungsanschluss erfolgen kann und wobei die Übermittlung in einer zweiten Richtung von dem ersten optischen Wartungsanschluss zu der Vorrichtung erfolgen kann,
Detektieren eines über den Spalt transmittierten elektromagnetischen Signals an dem zweiten optischen Wartungsanschluss falls die Übermittlung in die erste Richtung erfolgt (S3a), und
Detektieren eines an dem Spalt reflektierten elektromagnetischen Signals an dem zweiten optischen Wartungsanschluss falls die Übermittlung in die zweite Richtung erfolgt (S3b).

9. Verfahren nach einem Anspruch 8, das Verfahren weiterhin aufweisend den Schritt:
Aufzeichnen eines durch den Spalt transmittierten oder am Spalt reflektierten elektromagnetischen Signals an dem zweiten optischen Wartungsanschluss (S6), wodurch eine Kontrolle der Kommunikation zwischen dem ersten optischen Wartungsanschluss und der Vorrichtung erfolgt.

10. Verfahren nach einem der Ansprüche 8 oder 9, das Verfahren weiterhin aufweisend den Schritt:
Kommunizieren zwischen dem ersten optischen Wartungsanschluss und dem zweiten optischen Wartungsanschluss mittels eines am Spalt reflektierten elektromagnetischen Signals (S7).

## Claims

1. Optical data transfer system (100), comprising an apparatus (101),
a first optical service port (102),
a second optical service port (103),
a physical data line (104) for transferring data by means of electromagnetic energy between the apparatus in the first optical service port and the second optical service port,
wherein the physical data line between the apparatus on the one hand and the first optical service port and second optical service port on the other hand is interrupted by a gap (105),
wherein the physical data line (104) has an optical signal splitter (106), and
wherein a piece of physical data line (104) is situated between the gap (105) and the optical signal splitter (106) ;
wherein the optical data transfer system (100) is configured to transmit an electromagnetic signal between the apparatus (101) and the first optical service port over the physical data line (104),
wherein the transmission may be carried out in a first direction from the apparatus (101) to the first optical service port and wherein the transmission may be carried out in a second direction from the first optical service port to the apparatus (101);
wherein the optical data transfer system (100) is further configured to detect an electromagnetic signal transmitted over the gap (105) to the second optical service port if the transmission is carried out in the first direction; and
configured to detect an electromagnetic signal reflected at the gap at the second optical service port if the transmission is carried out in the second direction.

2. Optical data transfer system according to Claim 1, wherein the physical data line is a fibre optic data line, at least immediately before and immediately after the gap.

3. Optical data transfer system according to Claim 1 or 2,
wherein a first piece (107) and a second piece (108) of the data line (104) are configured in such a way in conjunction with the gap that the electromagnetic energy is damped in the case of a transmission of electromagnetic energy over the gap, the damping being selected from the group consisting of 0.2 dB; 0.5 dB; 1.0 dB; 1.5 dB; 2.0 dB; 2.5 dB; 3.0 dB.

4. Optical data transfer system according to any one of Claims 1 to 3,
wherein a first piece (107) and a second piece (108) of the data line (104) are configured in such a way in conjunction with the gap that the electromagnetic energy is damped in the case of a reflection of electromagnetic energy, which is reflected at the gap when arriving from an optical service port, the damping being selected from the group consisting of 6 dB; 6.5 dB; 7.0 dB; 7.5 dB; 8.0 dB; 8.5 dB; 9.0 dB; 9.5 dB; 10.0 dB; 10.5 dB, 11 dB; 11.5 dB; 12.0 dB; 12.5 dB; 13.0 dB; 13.5 dB; and 14.0 dB.

5. Optical data transfer system according to any one of Claims 1 to 4,
wherein the gap (105) comprises air, zirconia or any other material which brings about a change in the refractive index.

6. Aircraft comprising an optical data transfer system according to any one of Claims 1 to 5.

7. Use of an optical data transfer system according to any one of Claims 1 to 5 in an aircraft.

8. Method for reading data of an apparatus, the method comprising the following steps:
providing a gap in a physical data line which is situated between an apparatus on the one hand and a first optical service port and a second optical service port on the other hand (S1),
providing an optical signal splitter in the physical data line, wherein a piece of physical data line is situated between the gap and the optical signal splitter,
transmitting an electromagnetic signal between the apparatus and the first optical service port over the physical data line (S2),
wherein the transmission may be carried out in a first direction from the apparatus to the first optical service port and wherein the transmission may be carried out in a second direction from the first optical service port to the apparatus,
detecting an electromagnetic signal transmitted over the gap at the second optical service port if the transmission is carried out in the first direction (S3a), and
detecting an electromagnetic signal reflected at the gap at the second optical service port if the transmission is carried out in the second direction (S3b).

9. Method according to Claim 8, the method furthermore comprising the following step:
recording an electromagnetic signal transmitted through the gap or reflected at the gap at the second optical service port (S6), as a result of which the communication between the first optical service port and the apparatus is monitored.

10. Method according to either of Claims 8 and 9, the method furthermore comprising the following step:
communicating between the first optical service port and the second optical service port by means of an electromagnetic signal reflected at the gap (S7).

## Revendications

1. Système de transmission optique de données (100) comportant un dispositif (101),
une première borne de service optique (102),
une deuxième borne de service optique (103),
une ligne de données liée à un corps solide (104) pour transmettre des données au moyen d'une énergie électromagnétique entre le dispositif et la première borne de service optique et la deuxième borne de service optique,
dans lequel la ligne de données liée à un corps solide est interrompue entre le dispositif, d'une part, et les première et deuxième bornes de service optique, d'autre part, par un interstice (105),
dans lequel la ligne de données liée à un corps solide (104) comporte un diviseur de signal optique (106), et dans lequel un tronçon de ligne de données liée à un corps solide (104) se trouve entre l'interstice (105) et le diviseur de signal optique (106) ;
dans lequel le système de transmission optique de données (100) est conçu pour transmettre un signal électromagnétique entre le dispositif (101) et la première borne de service optique par l'intermédiaire de la ligne de données liée à un corps solide (104), dans lequel la transmission peut s'effectuer dans une première direction, du dispositif (101) vers la première borne de service optique, et dans lequel la transmission peut s'effectuer dans une deuxième direction, de la première borne de service optique vers le dispositif (101) ;
dans lequel le système de transmission optique de données (100) est en outre conçu pour détecter un signal électromagnétique transmis par l'intermédiaire de l'interstice (105) à la deuxième borne de service optique dans le cas où la transmission est effectuée dans la première direction ; et
est conçu pour détecter un signal électromagnétique réfléchi sur l'interstice au niveau de la deuxième borne de service optique dans le cas où la transmission est effectuée dans la deuxième direction.

2. Système de transmission optique de données selon la revendication 1,
dans lequel la ligne de données liée à un corps solide est une ligne de données à fibre optique au moins immédiatement avant et immédiatement après l'interstice.

3. Système de transmission optique de données selon la revendication 1 ou 2,
dans lequel un premier tronçon (107) et un deuxième tronçon (108) de la ligne de données (104) sont réalisés en liaison avec l'interstice de manière à ce que, lors d'une transmission d'énergie électromagnétique par l'intermédiaire de l'interstice, il se produise un amortissement de l'énergie électromagnétique, qui est sélectionné dans le groupe constitué de 0,2 dB ; 0,5 dB ; 1,0 dB ; 1,5 dB ; 2,0 dB ; 2,5 dB ; 3,0 dB.

4. Système de transmission optique de données selon l'une quelconque des revendications 1 à 3,
dans lequel un premier tronçon (107) et un deuxième tronçon (108) de la ligne de données (104) sont réalisés en liaison avec l'interstice de manière à ce que, lors d'une réflexion d'énergie électromagnétique, qui est réfléchie sur l'interstice en provenance d'une borne de service optique, il se produise un amortissement de l'énergie électromagnétique qui est sélectionné dans le groupe constitué de 6 dB ; 6,5 dB ; 7,0 dB ; 7,5 dB ; 8,0 dB ; 8,5 dB ; 9,0 dB ; 9,5 dB ; 10,0 dB ; 10,5 dB, 11 dB ; 11,5 dB ; 12,0 dB ; 12,5 dB ; 13,0 dB ; 13,5 dB ; et 14,0 dB.

5. Système de transmission optique de données selon l'une quelconque des revendications 1 à 4,
dans lequel l'interstice (105) comporte de l'air, de la zircone ou un autre matériau provoquant une modification de l'indice de réfraction.

6. Aéronef comportant un système de transmission optique de données selon l'une quelconque des revendications 1 à 5.

7. Utilisation d'un système de transmission optique de données selon l'une quelconque des revendications 1 à 5 dans un aéronef.

8. Procédé de lecture de données d'un dispositif, le procédé comportant les étapes consistant à :
prévoir un interstice dans une ligne de données liée à un corps solide, qui se trouve entre un dispositif, d'une part, et des première et deuxième bornes de service optique d'autre part (S1),
prévoir un diviseur de signal optique dans la ligne de données liée à un corps solide, dans lequel un tronçon de ligne de données liée à un corps solide se trouve entre l'interstice et le diviseur de signal optique,
transmettre un signal électromagnétique entre le dispositif et la première borne de service optique par l'intermédiaire de la ligne de données liée à un corps solide (S2),
dans lequel la transmission peut s'effectuer dans une première direction du dispositif vers la première borne de service optique et dans lequel la transmission peut s'effectuer dans une deuxième direction de la première borne de service optique vers le dispositif,
détecter un signal électromagnétique transmis par l'intermédiaire de l'interstice au niveau de la deuxième borne de service optique dans le cas où la transmission est effectuée dans la première direction (S3a), et
détecter un signal électromagnétique réfléchi sur l'interstice au niveau de la deuxième borne de service optique dans le cas où la transmission est effectuée dans la deuxième direction (S3b).

9. Procédé selon la revendication 8, le procédé comprenant en outre l'étape consistant à :
enregistrer un signal électromagnétique transmis par l'intermédiaire de l'interstice ou réfléchi sur l'interstice au niveau de la deuxième borne de service optique (S6), de telle sorte qu'une contrôle de la communication entre la première borne de service optique et le dispositif est effectué.

10. Procédé selon l'une quelconque des revendications 8 ou 9, le procédé comprenant en outre l'étape consistant à :
communiquer entre la première borne de service optique et la deuxième borne de service optique au moyen d'un signal électromagnétique réfléchi sur l'interstice (S7).
